(19) Europäisches Patentamt
European Patent Office
Office européen des brevets

(11) **EP 2 798 198 B1**

(12) **EUROPEAN PATENT SPECIFICATION**

(45) Date of publication and mention
of the grant of the patent:
**21.09.2016 Bulletin 2016/38**

(51) Int Cl.:
***F03D 7/02*** (2006.01)

(21) Application number: **12805932.6**

(22) Date of filing: **13.12.2012**

(86) International application number:
**PCT/DK2012/050462**

(87) International publication number:
**WO 2013/097853 (04.07.2013 Gazette 2013/27)**

(54) **METHOD FOR CONTROLLING A WIND TURBINE**

VERFAHREN ZUM STEUERN EINER WINDTURBINE

PROCÉDÉ DE CONTRÔLE D'UNE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.12.2011 EP 11382402**

(43) Date of publication of application:
**05.11.2014 Bulletin 2014/45**

(73) Proprietor: **Vestas Wind Systems A/S
8200 Aarhus N (DK)**

(72) Inventor: **MATESANZ, Alvaro Gil
E-28760 Tres Cantos (ES)**

(74) Representative: **Vestas Patents Department
Hedeager 42
8200 Aarhus N (DK)**

(56) References cited:
**WO-A1-98/42980     WO-A2-2010/037387
GB-A- 2 476 316**

## Description

Technical field

The present invention relates to a method for controlling a wind turbine that allows the optimization of power output in a wind turbine placed in a wind farm while maintaining the noise emission below the legal limits defined by local regulations.

Background

A consequence of the use of wind turbines to produce power is the generation of noise both from the mechanical system and from the blades of the wind turbines, which causes great discomfort to residents living in areas neighbouring wind farms. The nature of noise generation by wind turbines depends on a number of factors which often interact and among which are site topography, the presence of natural or artificial obstacles between emitter and receptor, the wind velocity, the wind direction and the nature of the atmospheric boundary layer, which makes very difficult to predict with enough accuracy the level of noise emitted when a wind turbine is placed in a real environment.

Strategies to reduce noise from an existing wind turbine usually are a combination of rotational speed reduction and pitch setting modification to operate the wind turbine in a low-noise mode. The operation of the wind turbine in a low-noise mode has the side effect of reducing the power output of the wind turbine, and therefore impacts in a negative way in the economic output of the wind farm. Nevertheless, the noise caused by the wind increases with the wind velocity and for high winds the noise from the wind turbine is masked by the natural noise caused by the wind itself. Therefore, most of wind turbine noise control modes return to the standard mode when wind velocity is greater than a specific value usually defined in the local noise regulations. However, the fact that some noise regulations define the noise measurement height at values different from the hub height introduces new variables in the problem, such as the wind turbine tower height and the wind velocity variation with height.

A first problem with this strategy is that noise is measured close to the ground while a wind turbine is generally measuring the wind at the wind turbine hub height. Generally, it is not feasible to put wind velocity sensors low in the field, at the height according to the standard because they are at risk to be destroyed, notably by people. To solve this difficulty the wind velocity variation with height is often approximated using a power law:

$$\frac{v}{v_{ref}} = \left(\frac{h}{h_{ref}}\right)^{\alpha},$$

$v$ being the wind velocity at height $h$, $v_{ref}$ the wind velocity at a reference height $h_{ref}$ and $\alpha$ the shear exponent, which provides the wind velocity variation with height, and a typical value of wind shear exponent is estimated for the type of terrain in which the wind turbine is located. The value of the wind velocity where standard operation mode can be used is determined thus as a function of hub height, shear exponent, noise measurement height and the critical wind velocity $v_{ref}$ defined in the corresponding local noise regulation.

However, the wind shear exponent is highly dependent on environmental conditions, such as temperature, stability of the atmosphere or day time. Therefore, the operation of the wind turbine according to the known method is based on a typical value which is far from accurate on the entire working regime, leading to an excess of noise emission outside legal limits if the shear exponent is underestimated, or to an excess of power production curtailment, if the shear exponent is overestimated.

GB2476316A discloses a wind turbine having a control method and controller for performing predictive control of a wind turbine generator. The predictive control system assumes a model of generator speed based on the values of the incident wind speed v(t) and the values of a control signal u(t) is output to the wind turbine in a feed forward loop. The model can be refined in real time as the wind turbine operates.

WO2010/037387A2 discloses a method for control of noise emission from a wind park in operation. The method comprises the steps of providing measurements of at least one wind speed and of at least one wind direction to a wind turbine noise emission model and emulating the noise level at a noise immission point.

WO98/42980A1 discloses a wind velocity measurement system that is mounted on the wind turbine and follows the motion of the nacelle so that the determination of the air velocity in front of the wind turbine may be determined at substantially the same relative position with respect to the nacelle independently of the motion of the nacelle.

Therefore it is an object of the present invention to provide a method for controlling a wind turbine which solves the abovementioned drawbacks present in the prior art, i.e. assuring that the noise limits imposed by regulations are fulfilled while the power output is improved if wind characteristics are favourable.

## SUMMARY OF THE INVENTION

This and other objects of the invention are achieved by a method according to independent claim 1 and a wind turbine system according to claim 13. Favourable embodiments are defined by the dependent claims.

The method for controlling a wind turbine according to the invention comprises the steps of determining a boundary layer profile of the wind coming towards the wind turbine, determining the wind velocity at a height at which noise is measured according to the regulations based on the boundary layer profile, and operating the wind turbine to maintain the emitted noise below a predetermined noise level when the wind velocity at the height at which noise is measured according to the regulations is below a predetermined value.

The boundary layer is understood as the layer of fluid near the surface of the wind turbine, in which the velocity of the fluid changes from zero at the surface to the free stream value away from the surface.

Advantageously, the method of the invention allows improving the performance of the wind turbine without the risk of exceeding a predetermined noise level by determining the upper limit of velocity at hub height by direct evaluation of the boundary layer profile.

According to the invention, the boundary layer profile is determined based on a measurement of at least one sensor.

A sensor installed at the height that is defined by the noise regulation can be used for determining the boundary layer profile.

The boundary layer profile can be determined based on a measurement of two or more sensors positioned at different heights to determine the value of instantaneous wind shear exponent.

The boundary layer profile can be also determined using systems of remote sensing such as lidar, sodar, etc.

Depending on the nature of the wind farm this process can be done turbine by turbine or in a reduced set of points in the wind farm.

The noise propagation could depend also on the wind direction because some correction factor could be necessary to take into account the terrain effect. In an embodiment of the invention, the signal of wind direction is used in combination with the wind velocity to determine the upper limit for noise at hub height. With this embodiment, the method of the invention can be performed only in directions where noise reduction has to be achieved.

In an embodiment, the method for controlling a wind turbine comprises the step of developing correlations between the boundary layer profile determined and at least one environmental variable.

In an embodiment, the environmental variable is selected from temperature, air density, wind speed, solar radiation, wind direction and turbulence.

In an embodiment, the step of developing correlations between the boundary layer profile determined and at least one environmental variable is performed during a predefined period of time.

In an embodiment, the method comprises determining the boundary layer profile based on at least one environmental variable and on the correlations developed between the profile of the boundary layer determined and said at least one environmental variable.

These and other aspects of the invention will be apparent from and elucidated with reference to the embodiments described hereinafter.

All the features described in this specification (including the claims, description and drawings) and/or all the steps of the described method can be combined in any combination, with the exception of combinations of such mutually exclusive features and/or steps.

**BRIEF DESCRIPTION OF THE DRAWINGS**

The invention will be better understood and its numerous objects and advantages will become more apparent to those skilled in the art by reference to the following drawings, in conjunction with the accompanying specification, in which:

Figures 1-3 show a schematic view of a wind park, the operation of which is controlled in order to limit the noise emitted.

Figure 4 schematically shows some of the variables involved in the method of the invention.

Figure 5 shows the real wind profile compared with the typical one in a situation where the real shear exponent is greater than the typical one.

Figure 6 shows the real wind profile compared with the typical one in a situation where the real shear exponent is smaller than the typical one.

Figure 7 shows a flowchart of an embodiment of the method of the invention.

Figure 8 shows a flowchart of an embodiment of the method of the invention.

**DETAILED DESCRIPTION OF A PREFERRED EMBODIMENT**

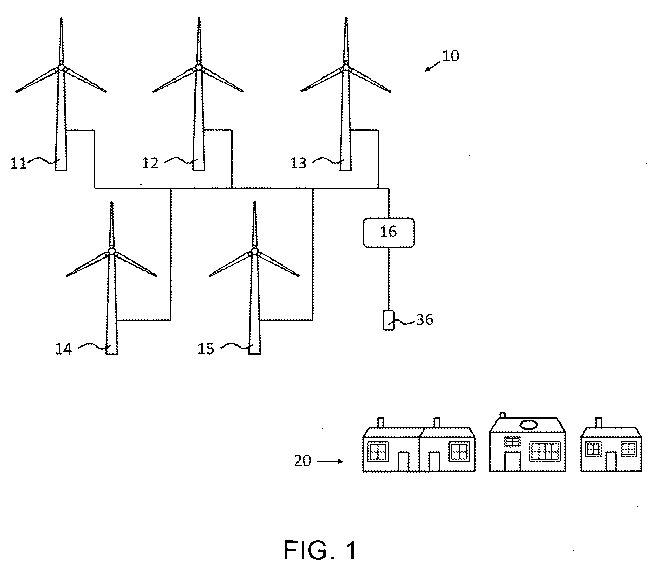

Figure 1 schematically shows a wind farm (10) and a village (20) located in its vicinity, the wind farm (10) comprising a plurality of wind turbines (11-15), a wind farm controller (16) and a sensing unit (36). The sensing unit (16) is adapted to determine a boundary layer profile of the wind coming towards at least one wind turbine. Processing means (not depicted) are adapted to determine the wind velocity at a predetermined height based on the boundary layer profile determined. The controller is a configured to adjust at least one operating parameter of the wind turbine to make the wind turbine work in a low-noise mode when the wind velocity at a predetermined height is below a specified critical value.

The sensing unit comprises at least one sensor capable of sensing the wind velocity, preferably a plurality of sensors located at different heights, or an only sensor capable of determining the boundary layer profile, such as a lidar or a sodar.

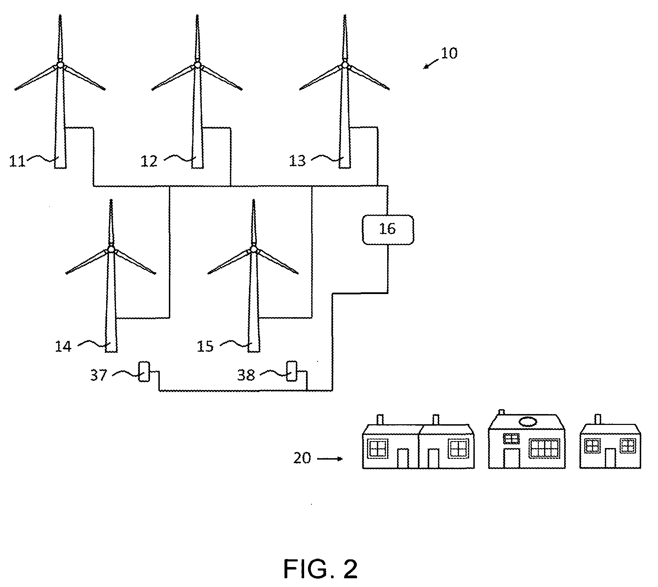

In the previous embodiment one sensing unit has been described. However, depending on the nature of the wind farm and its location, more than one sensing unit can be provided to determine the boundary layer profile at a plurality of points of the wind farm. Figure 2 schematically depicts an embodiment comprising two sensing units (37, 38) to determine the boundary layer profile at two different points of the wind farm, such that a number of wind turbines (11, 14) are operated according to the wind velocity determined based on the boundary layer profile determined by a first sensing unit (37) and a number of wind turbines (12, 13, 15) are operated according to the wind velocity determined based on the boundary layer profile determined by the second sensing unit (38).

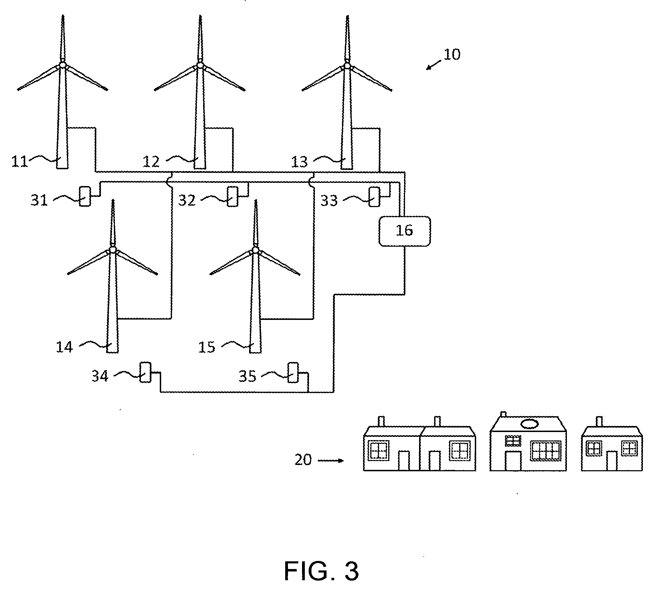

The process can be even done turbine by turbine, as illustrated in Figure 3, where the wind farm (10) comprises a sensing unit (31-35) associated to each wind turbine (11-15), such that the boundary layer profile of the wind coming towards each of the wind turbines (11-15) is determined. The wind farm controller can thus control the operation of each wind turbine according to the specific boundary layer profile determined for said wind turbine to maintain the noise emitted by the wind farm within the legal limits. This embodiment is preferred where the nature of the wind farm, such as site topography, or the presence of obstacles, makes the boundary layer profile highly dependent on the specific point of measurement.

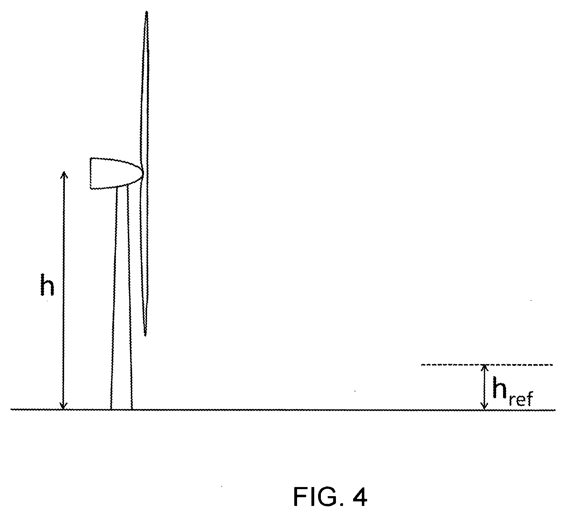

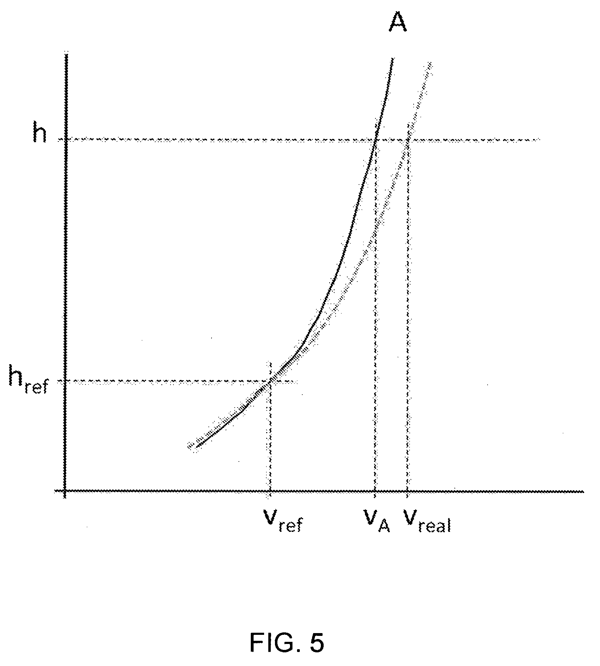

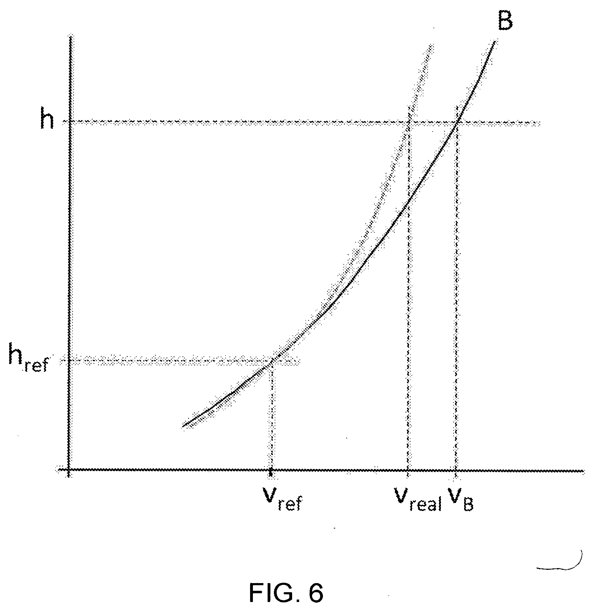

Figures 5 and 6 show an example of how the real wind shear can fluctuate around an expected wind shear. In figures 5 and 6 the wind velocity $v$ and the height $h$ have been schematically represented in the horizontal and vertical axis, respectively. In the figures, $h_{ref}$ corresponds to the height at which noise is measured according to the regulations, $V_{ref}$ corresponds to the wind velocity value at height $h_{ref}$, above which wind velocity the natural noise caused by the wind is assumed to mask the noise from the wind turbine and $h$ is the height at which the hub is located (as shown in figure 4). The curves represent the variation of the wind velocity with height for different values of shear exponent.

If the wind velocity is measured at a height h different from the reference height $h_{ref}$, as is usually the case, the wind velocity at height h corresponding to wind velocity $v_{ref}$ at height $h_{ref}$ needs to be estimated assuming a value of the wind shear exponent. In figure 5 curve A corresponds to a typical value of wind shear exponent assumed for a type of terrain, whereas the grey dashed curve corresponds to the real wind shear, with a wind shear exponent greater than the typical value assumed. According to curve A, the wind velocity $(v_A)$ at height h above which the wind turbine can be operated in the standard operation mode would be lower than the real wind velocity at height h $(V_{real})$ corresponding to a wind velocity $v_{ref}$ at height $h_{ref}$. Consequently, the standard operating mode of the wind turbine would be set for a wind velocity lower than the one required by the regulation and the noise emitted by the wind turbine would exceed the legal limits.

On the other hand (figure 6), if the real shear exponent (grey dashed curve) is smaller than the typical one (curve B) assumed for the determination of the wind velocity, the wind velocity $v_B$ determined at height h as corresponding to wind velocity $v_{ref}$ at height $h_{ref}$ and taken as a reference for setting the operation mode of the wind turbine is greater than the real wind velocity at height $h$ $(v_{real})$ corresponding to a wind velocity $v_{ref}$ at height $h_{ref}$. Consequently, the standard operation mode of the wind turbine would be set for a wind velocity greater than the one required by the regulation and the power production of the wind turbine would be below its capabilities for wind velocities between $v_{real}$ and $v_B$.

One example of the above problem is the change in the wind shear exponent originated by the day-night cycle which can create important variations in the boundary layer profile because of the effect of positive or negative heating of air. In a flat terrain during a sunny day the wind shear exponent can be about 0.16, but during night the air is cooled by the earth surface and the boundary layer becomes more laminar, so this parameter can reach values of the order of 0.3-0.4. Therefore, the wind turbine will be noisier than expected during night time if the operation of the wind turbine is not adjusted to the new boundary layer profile, as explained with reference to figure 5.

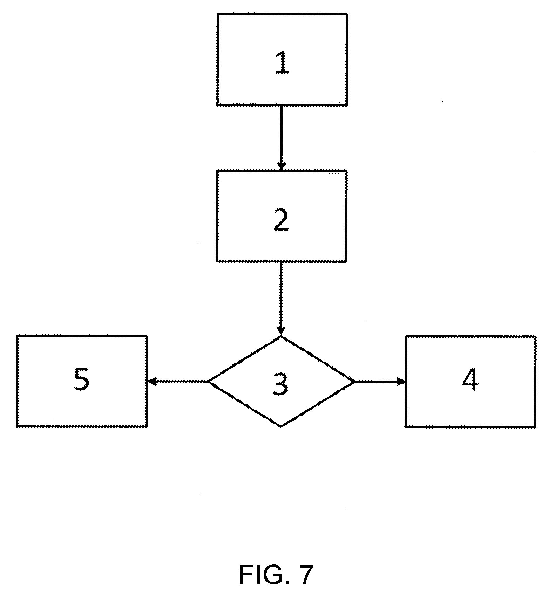

A preferred embodiment of the method for controlling a wind turbine according to the invention is schematically shown in the flowchart of figure 7 and comprises the steps of determining a boundary layer profile of the wind coming towards the wind turbine (1); determining the wind velocity at a predetermined height based on the boundary layer profile determined (2); and operating the wind turbine (3) to maintain the emitted noise below a predetermined noise level when the wind velocity at the predetermined height is below a predetermined value. The step of operating the wind turbine (3) to maintain the emitted noise below a predetermined noise level preferably comprises operating the wind turbine in a low-noise mode when the wind velocity determined is below a predefined value (5) and operating the wind turbine in the standard mode, at its nominal r.p.m., when the wind velocity determined is above a predefined value (4).

Due to the determination of the boundary layer profile, the method of the invention allows to improve the performance of the wind turbine without the risk of exceeding a predetermined noise level.

Operation of the wind turbine to maintain the emitted noise below a predetermined noise level can be performed reducing the rotational speed or changing the pitch settings, for example.

In an embodiment of the invention, the boundary layer profile is determined based on a measurement of at least one sensor capable of sensing the wind velocity, preferably a plurality of sensors located at different heights, or an only sensor capable of determining the boundary layer profile, such as a lidar or a sodar.

The method of the invention can be used to control a wind farm comprising a plurality of wind turbines, by controlling one, a plurality of or all the turbines of the wind farm.

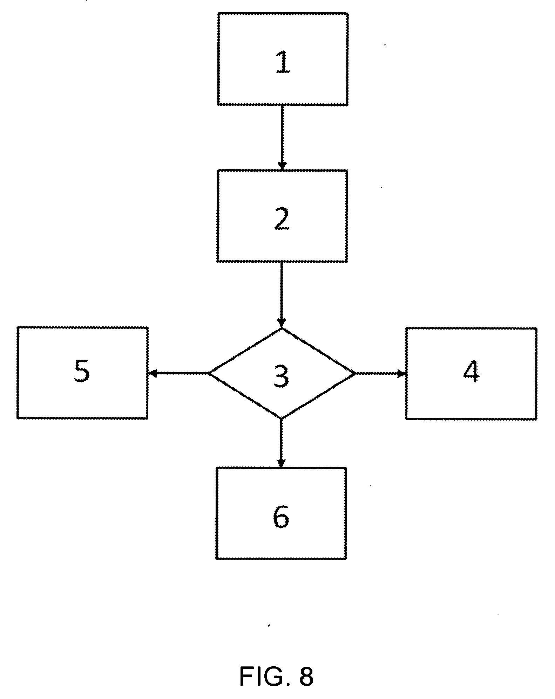

In an embodiment of the method of the invention schematically shown in the flowchart of figure 8, the boundary layer profile determined by the method and system of the invention is also used to develop correlations (6) between the boundary layer profile determined and at least one environmental variable, such as temperature, density, wind speed, solar radiation, wind direction or turbulence, which can be used in the wind farm to estimate the boundary layer profile by using indirect measurement.

In a preferred embodiment the system will work in a learning mode during a predefined period of time in which the boundary layer profile is determined and correlations between the boundary layer profile and the at least one environmental variable are developed. Once the correlations have been developed, the system will estimate the boundary layer profile based on environmental variables determined, e.g. measured, and on the correlations defined during the learning stage.

The correlations developed in a wind farm can be used to estimate the boundary layer profile in sites that are close to the wind farm where correlations have been developed.

These correlations can be generated using numerical methods that take into account different variables that have influence over the boundary layer profile. Another possibility is to obtain these correlations using experimental values obtained in a wind tunnel.

Even in the case of using direct determination of the boundary layer profile, the correlations developed in other wind farms or by numerical methods can be used to have an expected value of the shape exponent (one of the parameters that define the shape of boundary layer) that can be used in the event of sensor failure.

**Claims**

1. Method for controlling a wind turbine to maintain emitted noise below a predetermined noise level, the method comprising the steps of:

   Determining (1) a boundary layer profile of the wind coming towards the wind turbine based on a measurement of at least one sensor (36); estimating (2) the wind velocity at the height at which noise is measured according to the regulations based on the boundary layer profile; and operating (3) the wind turbine to maintain the emitted noise below a predetermined noise level when the estimated wind velocity at the height at which noise is measured according to the regulations ($h_{ref}$) is below a predetermined value.

2. Method for controlling a wind turbine according to claim 1, wherein the boundary layer profile is determined based on a measurement of at least two sensors positioned at different heights.

3. Method for controlling a wind turbine according to claim 1, wherein the boundary layer profile is determined by a system of remote sensing.

4. Method for controlling a wind turbine according to claim 3, wherein the system of remote sensing is a lidar or a sodar.

5. Method for controlling a wind turbine according to any of the previous claims, comprising using the signal of wind direction to determine the wind velocity at the height.

6. Method for controlling a wind turbine according to any of the previous claims, comprising the step of developing correlations between the boundary layer profile determined and at least one environmental variable.

7. Method for controlling a wind turbine according to claim 6, wherein the environmental variable is selected from temperature, air density, wind speed, solar radiation, wind direction and turbulence.

8. Method for controlling a wind turbine according to claim 6 or 7, wherein the step of developing correlations between the boundary layer profile determined and at least one environmental variable is performed during a predefined period of time.

9. Method for controlling a wind turbine according to any of claims 6-8, comprising determining the boundary layer profile based on at least one environmental variable and on the correlations developed between the boundary layer profile determined and said at least one environmental variable.

10. Method for controlling a wind turbine according to any of claims 6-9, wherein the correlations are generated using numerical methods.

11. Method for controlling a wind turbine according to any of claims 6-10, wherein the correlations are generated using experimental values obtained in a wind tunnel.

12. Method for controlling a wind farm comprising a plurality of wind turbines, the method comprising controlling at least one of the wind turbines according to the method according to any of the previous claims.

13. Wind turbine system configured to maintain emitted noise below a predetermined noise level the system comprising:

a wind turbine (11)-(15),
a sensing means (36) adapted to determine (1)
a boundary layer profile of the wind coming towards the wind turbine;
processing means configured to estimate (2) the wind velocity at the height at which noise is measured according to the regulations ($h_{ref}$) based on the boundary layer profile; and
a wind farm controller (16) configured to operate the wind turbine to maintain the emitted noise below the predetermined noise level when the estimated wind velocity at the height at which noise is measured according to the regulations is below the predetermined value.

14. Wind turbine system according to claim 13; comprising:

a plurality of wind turbines,
at least one sensing means adapted to determine a boundary layer profile of the wind coming towards at least one of the wind turbines;
processing means configured to estimate the wind velocity at the height at which noise is measured according to regulations based based at least on the boundary layer profiles determined; and
a wind farm controller configured to operate at least one of the wind turbines to maintain the emitted noise below the predetermined noise level when the wind velocity at the height at which noise is measured according to regulations is below the predetermined value.

**Patentansprüche**

1. Verfahren zum Steuern einer Windturbine, um Lärmemission unter einem vorgegebenen Lärmpegel zu halten, das Verfahren umfassend die Schritte:

Bestimmen (1) eines Grenzschichtprofils des Winds, der auf die Windturbine zukommt, basierend auf einer Messung von zumindest einem Sensor (36);
Schätzen (2) der Windgeschwindigkeit in der Höhe, in der Lärm gemäß Verordnungen gemessen wird, basierend auf dem Grenzschichtprofil; und
Betreiben (3) der Windturbine, um die Lärmemission unter einem vorgegebenen Lärmpegel zu halten, wenn die geschätzte Windgeschwindigkeit in der Höhe, in der Lärm gemäß Verordnungen gemessen wird, ($h_{ref}$), unter einem vorgegebenen Wert ist.

2. Verfahren zum Steuern einer Windturbine nach Anspruch 1, wobei das Grenzschichtprofil bestimmt wird, basierend auf einer Messung von zumindest zwei Sensoren, die in verschiedenen Höhen angeordnet sind.

3. Verfahren zum Steuern einer Windturbine nach Anspruch 1, wobei das Grenzschichtprofil von einem Fernerfassungssystem bestimmt wird.

4. Verfahren zum Steuern einer Windturbine nach Anspruch 3, wobei das Fernerfassungssystem ein Lidar oder ein Sodar ist.

5. Verfahren zum Steuern einer Windturbine nach einem der vorhergehenden Ansprüche, umfassend Verwenden des Signals der Windrichtung, um die Windgeschwindigkeit in der Höhe, in der Lärm gemäß Verordnungen gemessen wird, zu bestimmen.

6. Verfahren zum Steuern einer Windturbine nach einem der vorhergehenden Ansprüche, umfassend den Schritt

Entwickeln von Beziehungen zwischen dem bestimmten Grenzschichtprofil und zumindest einem Umgebungskennwert.

7. Verfahren zum Steuern einer Windturbine nach Anspruch 6, wobei der Umgebungskennwert ausgewählt ist aus Temperatur, Luftdichte, Windgeschwindigkeit, Sonnenstrahlung, Windrichtung und Turbulenz.

8. Verfahren zum Steuern einer Windturbine nach Anspruch 6 oder 7, wobei der Schritt Entwickeln von Beziehungen zwischen dem bestimmten Grenzschichtprofil und zumindest einem Umgebungskennwert während eines vorgegebenen Zeitraumes durchgeführt wird.

9. Verfahren zum Steuern einer Windturbine nach einem der Ansprüche 6-8, umfassend Bestimmen des Grenzschichtprofils basierend auf zumindest einem Umgebungskennwert und auf den Beziehungen entwickelt zwischen dem bestimmten Grenzschichtprofil und dem zumindest einen Umgebungskennwert.

10. Verfahren zum Steuern einer Windturbine nach einem der Ansprüche 6-9, wobei die Beziehungen unter Verwendung von numerischen Verfahren erzeugt werden.

11. Verfahren zum Steuern einer Windturbine nach einem der Ansprüche 6-10, wobei die Beziehungen unter Verwendung von experimentellen Werten, die in einem Windtunnel erhalten wurden, erzeugt werden.

12. Verfahren zum Steuern eines Windparks, umfassend eine Mehrzahl von Windturbinen, das Verfahren umfassend Steuern zumindest einer der Windturbinen nach dem Verfahren nach einem der vorhergehenden Ansprüche.

13. Windturbinensystem ausgebildet zum Halten von Lärmemission unter einem vorgegebenen Lärmpegel, das System umfassend:

eine Windturbine (11)-(15),
ein Erfassungsmittel (36), ausgebildet zum Bestimmen (1) eines Grenzschichtprofils des Winds, der auf die Windturbine zukommt;
Verarbeitungsmittel, ausgebildet zum Schätzen (2) der Windgeschwindigkeit in der Höhe, in der Lärm gemäß Verordnungen gemessen wird, ($h_{ref}$), basierend auf dem Grenzschichtprofil; und
eine Windparksteuervorrichtung (16) ausgebildet zum Betreiben der Windturbine, um die Lärmemission unter einem vorgegebenen Lärmpegel zu halten, wenn die geschätzte Windgeschwindigkeit in der Höhe, in der Lärm gemäß Verordnungen gemessen wird, unter einem vorgegebenen Wert ist.

14. Windturbinensystem nach Anspruch 13, umfassend:

eine Mehrzahl von Windturbinen,
zumindest ein Erfassungsmittel, ausgebildet zum Bestimmen eines Grenzschichtprofils des Winds, der auf zumindest eine der Windturbinen zukommt;
Verarbeitungsmittel, ausgebildet zum Schätzen der Windgeschwindigkeit in der Höhe, in der Lärm gemäß Verordnungen gemessen wird, basierend zumindest auf den bestimmten Grenzschichtprofilen; und
eine Windparksteuervorrichtung ausgebildet zum Betreiben zumindest einer der Windturbinen, um die Lärmemission unter einem vorgegebenen Lärmpegel zu halten, wenn die Windgeschwindigkeit in der Höhe, in der Lärm gemäß Verordnungen gemessen wird, unter einem vorgegebenen Wert ist.

**Revendications**

1. Procédé pour commander une éolienne afin de maintenir le bruit émis sous un niveau de bruit prédéterminé, le procédé comprenant les étapes consistant à :

déterminer (1) un profil de couche limite du vent arrivant vers l'éolienne sur la base d'une mesure d'au moins un capteur (36) ;

estimer (2) la vitesse du vent à la hauteur à laquelle le bruit est mesuré selon les réglementations sur la base du profil de couche limite ; et
faire fonctionner (3) l'éolienne afin de maintenir le bruit émis sous un niveau de bruit prédéterminé quand la vitesse du vent estimée à la hauteur à laquelle le bruit est mesuré selon les réglementations ($h_{ref}$) est sous une valeur prédéterminée.

2. Procédé pour commander une éolienne selon la revendication 1, dans lequel le profil de couche limite est déterminé sur la base d'une mesure d'au moins deux capteurs positionnés à différentes hauteurs.

3. Procédé pour commander une éolienne selon la revendication 1, dans lequel le profil de couche limite est déterminé par un système de détection à distance.

4. Procédé pour commander une éolienne selon la revendication 3, dans lequel le système de détection à distance est un lidar ou un sodar.

5. Procédé pour commander une éolienne selon l'une quelconque des revendications précédentes, comprenant l'utilisation du signal de direction du vent afin de déterminer la vitesse du vent à la hauteur à laquelle le bruit est mesuré selon les réglementations.

6. Procédé pour commander une éolienne selon l'une quelconque des revendications précédentes, comprenant l'étape de développement de corrélations entre le profil de couche limite déterminé et au moins une variable environnementale.

7. Procédé pour commander une éolienne selon la revendication 6, dans lequel la variable environnementale est sélectionnée parmi la température, la densité de l'air, la vitesse du vent, le rayonnement solaire, la direction du vent et la turbulence.

8. Procédé pour commander une éolienne selon la revendication 6 ou 7, dans lequel l'étape de développement de corrélations entre le profil de couche limite déterminé et au moins une variable environnementale est effectuée pendant une période de temps prédéfinie.

9. Procédé pour commander une éolienne selon l'une quelconque des revendications 6-8, comprenant la détermination du profil de couche limite sur la base d'au moins une variable environnementale et des corrélations développées entre le profil de couche limite déterminé et ladite au moins une variable environnementale.

10. Procédé pour commander une éolienne selon l'une quelconque des revendications 6-9, dans lequel les corrélations sont générées en utilisant des procédés numériques.

11. Procédé pour commander une éolienne selon l'une quelconque des revendications 6-10, dans lequel les corrélations sont générées en utilisant des valeurs expérimentales obtenues dans un tunnel de vent.

12. Procédé pour commander un parc éolien comprenant une pluralité d'éoliennes, le procédé comprenant la commande d'au moins une des éoliennes selon le procédé selon l'une quelconque des revendications précédentes.

13. Système d'éolienne configuré pour maintenir le bruit émis sous un niveau de bruit prédéterminé, le système comprenant :

une éolienne (11)-(15),
un moyen de détection (36) adapté pour déterminer (1) un profil de couche limite du vent arrivant vers l'éolienne ;
un moyen de traitement configuré pour estimer (2) la vitesse du vent à la hauteur à laquelle le bruit est mesuré selon les réglementations ($h_{ref}$) sur la base du profil de couche limite ; et
un dispositif de commande de parc éolien (16) configuré pour faire fonctionner l'éolienne afin de maintenir le bruit émis sous le niveau de bruit prédéterminé quand la vitesse du vent estimée à la hauteur à laquelle le bruit est mesuré selon les réglementations est sous la valeur prédéterminée.

14. Système d'éolienne selon la revendication 13, comprenant :

une pluralité d'éoliennes,
au moins un moyen de détection adapté pour déterminer un profil de couche limite du vent arrivant vers au moins une des éoliennes ;
un moyen de traitement configuré pour estimer la vitesse du vent à la hauteur à laquelle le bruit est mesuré selon les réglementations sur la base au moins des profils de couche limite déterminés ; et
un dispositif de commande de parc éolien configuré pour faire fonctionner au moins une des éoliennes afin de maintenir le bruit émis sous le niveau de bruit prédéterminé quand la vitesse du vent à la hauteur à laquelle le bruit est mesuré selon les réglementations est sous la valeur prédéterminée.

FIG. 1

FIG. 2

FIG. 3

FIG. 4

FIG. 5

FIG. 6

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2476316 A
- WO 2010037387 A2
- WO 9842980 A1